(19) Europäisches Patentamt
European Patent Office
Office européen des brevets

(11) **EP 2 596 502 B1**

(12) **EUROPEAN PATENT SPECIFICATION**

(45) Date of publication and mention
of the grant of the patent:
**04.03.2020 Bulletin 2020/10**

(21) Application number: **10854853.8**

(22) Date of filing: **21.07.2010**

(51) Int Cl.:
*G21F 9/00* (2006.01)          *G21F 9/28* (2006.01)
*G21F 9/12* (2006.01)          *B08B 3/08* (2006.01)
*G21C 19/307* (2006.01)

(86) International application number:
**PCT/CA2010/001123**

(87) International publication number:
**WO 2012/009781 (26.01.2012 Gazette 2012/04)**

(54) **REACTOR DECONTAMINATION SYSTEM AND PROCESS**

DEKONTAMINATIONSSYSTEM FÜR REAKTOREN UND VERFAHREN

PROCESSUS ET SYSTÈME DE DÉCONTAMINATION DE RÉACTEURS

(84) Designated Contracting States:
**AL AT BE BG CH CY CZ DE DK EE ES FI FR GB
GR HR HU IE IS IT LI LT LU LV MC MK MT NL NO
PL PT RO SE SI SK SM TR**

(43) Date of publication of application:
**29.05.2013 Bulletin 2013/22**

(73) Proprietor: **Atomic Energy of Canada Limited
Chalk River ON K0J 1J0 (CA)**

(72) Inventors:
• **SPERANZINI, Robert, A.
Deep River, Ontario KOJ 1PO (CA)**
• **MILLER , Douglas
Orleans, Ontario K1E 1S5 (CA)**

• **SEMMLER , Jaleh
Deep River, Ontario KOJ 1PO (CA)**

(74) Representative: **Trinks, Ole et al
Meissner Bolte Patentanwälte
Rechtsanwälte Partnerschaft mbB
Postfach 10 26 05
86016 Augsburg (DE)**

(56) References cited:
**WO-A1-95/00681          WO-A1-95/00681
CA-A1- 1 062 590          CA-A1- 1 062 590
CA-A1- 1 136 398          CA-A1- 2 084 049
FR-A1- 2 644 618          GB-A- 2 064 852
US-A- 4 537 666          US-A1- 2002 196 891**

**Description**

FIELD OF THE INVENTION

This invention is directed to the decontamination of surfaces contaminated with radioactive materials, such as heat transfer and coolant surfaces in nuclear reactors. A decontaminating reagent mixture is provided having improved efficiency at dissolving metal oxides and radionuclides in a regenerative process.

BACKGROUND OF THE INVENTION

The reactor coolant system of a CANDU® (CANada Deuterium Uranium) reactor is comprised of carbon steel and stainless steel piping, and nickel-based steam generator tubing which transports heavy water between the reactor core and steam generators to produce electricity. After several years of operation of a nuclear facility, the build-up of oxides and radionuclides in a nuclear reactor will result in a reduction in heat transfer properties, reduced flow rate, base metal corrosion and high radiation fields. The build-up of oxides and radionuclides will result in difficulties in system maintenance and inspection, and ultimately a reduction in power generated. Consequently a chemical decontamination process will need to be used to dissolve and remove oxides and radionuclides. In addition, during the decommissioning of a nuclear reactor, such radioactive surface deposits must be removed from the reactor coolant surfaces using a decontamination process.

In the past, decontamination of reactor coolant systems was conducted by circulating various concentrated reagents through the equipment and then discharging the spent reagents into a radioactive liquid waste storage area. In some applications, the spent reagents were treated using an ion exchange resin to remove metals and radionuclides. In other applications, the volume of the liquid waste was reduced by evaporation and/or dissolved metals and radionuclides were precipitated by chemical treatment. The spent ion exchange resin was then removed and stored as solid waste. These methods have been used in both pressurized water reactors (PWR) and boiling water reactors (BWR), and on both stainless steel and carbon steel piping.

Canadian Patent 1,062,590 (CA '590), issued September 18, 1979, discloses CAN-DECON™ technology, which is a regenerative process of decontaminating heavy water cooled nuclear reactors that includes injecting an acid chemical reagent directly into circulating coolant to form a dilute reagent solution that dissolves radioactive contaminants in the coolant system. The dilute reagent solution is circulated to dissolve the deposits and then passed through a cation exchange resin to collect dissolved cations and radionuclides and regenerate the acidic reagent for recycling. Finally, the acidic reagents are removed by contact with an anion exchange resin to restore the coolant to its original condition. Restoration of the coolant is particularly important with heavy water. Decontamination reagents disclosed in the CAN-DECON™ technology include ethylenediamine tetraacetic acid (EDTA), oxalic acid, citric acid, nitrilotriacetic acid and thioglycolic acid.

It is known from US 4 537 666 A and US 2002/196891 A and FR 2 644 618 A to use a decontamination reagent on the basis of EDTA and citric acid in the form of a solution.

Canadian Patent 1,136,398 (CA '398), issued November 30, 1982, discloses CAN-DEREM™ technology, which is a method of decontaminating the surfaces of shutdown heavy water moderated and cooled nuclear reactors that, like the CAN-DECON™, involves circulating an aqueous solution of decontaminating reagents which can be regenerated by passing the reagents and dissolved radionuclides through an ion exchange column. The reagent disclosed in CA '398 includes a dilute solution of citric acid, EDTA, oxalic acid and formic acid. According to CA '398 the use of formic acid/formate enhances the radiolytic stability of EDTA in decontamination solutions in comparison to the same decontamination solutions that do not contain any formic acid/formate.

Once introduced on the market, the CAN-DEREM™ method of decontamination largely replaced the former CAN-DECON^T™ method. The CAN-DEREM™ method and reagent has been used since the 1980s in the sub-system and full system decontamination and decommissioning of nuclear reactors worldwide and is considered to be one of the most efficient and safest reactor decontamination methods.

United States Patent 4,512,921 (US '921), issued April 23, 1985, discloses a regenerative method of decontaminating the coolant system of a water-cooled nuclear power reactor using a small amount of one or more weak-acid organic complexing agents. The chemical decontamination method described in US '921 is known as the CITROX^T™ process. The specification teaches that (column 4, lines 38-40) the "citric acid concentration may vary from about 0.002-0.01 M with 0.005 M being the preferred concentration" (corresponding to 0.4-1.92 g/L, with 0.96 g/L being the preferred concentration) and claims a weak organic complexing agent comprising 0.005-0.02 M (0.45-1.8 g/L) oxalic acid and 0.002-0.01 M (0.4-1.92 g/L) citric acid. However, the US '921 disclosure refers to only a single experiment, carried out in the laboratory, on concentrations of citric acid exceeding 0.005 M (0.96 g/L). That experiment was carried out in a laboratory, and was only to pre-saturate an anion resin in preparation for decontamination. The concentration of citric acid employed in the test for removing iron oxides and cobalt from a circulating test loop was 0.005 M (0.96 g/L).

The reagent used in the US '921 decontamination process includes a combination of oxalic acid and citric acid. The CITROX™ process commonly employed in PWR and BWR reactor piping and system components uses 0.01 M (0.9 g/L) oxalic acid and 0.005 M (0.96 g/L) of citric acid.

In addition to CAN-DECON™, CAN-DEREM™ and CITROX™ processes, worldwide several other decontamination processes, namely CORD™, LOMI™ and EMMA™ and variations originating from these processes, have been developed for use in specific reactors.

Siemens AG Kraft Werk Union (KWU) developed the Chemical Oxidation Reduction Decontamination (CORD™) process in 1986. The CORD™ process is a more dilute version of the older processes developed by KWU and is applied in combination with an oxidizing permanganic acid (HP) process. The CORD™ process, which is designed for reactors made mainly of stainless steel, uses the HP process to oxidize Cr(III) to Cr(VI), and oxalic acid as the main decontamination reagent at a concentration of 0.022 M (2 g/L). It should be noted that decontamination of reactors with stainless steel piping, e.g., PWRs, requires the use of an oxidizing step to condition the stainless steel surfaces. The oxidizing step can be applied under acidic conditions using a process such as permanganic acid (HP) process or nitric permanganate (NP) process, or under alkaline conditions using, for example, an alkaline permanganate (AP) process.

The CORD™ and CITROX™ methods developed for application in PWRs and BWRs are oxalic acid based processes. However, oxalic acid based decontamination methods are not suitable for use in systems with high oxide loadings as iron oxalate precipitation results in an ineffective decontamination.

A collaborative research programme on the decontamination of water-cooled reactor circuits between the Central Electricity Generating Board (CEGB) in England, and Berkeley Nuclear Laboratories resulted in the development of the Low Oxidation State Metal Ion (LOMI™) reagents in the late 1970 and early 1980s. The LOMI™ reagent consists of a reducing metal ion such as vanadium ($V^{2+}$), complexed with a chelating ligand such as picolininc acid to form a reducing agent, in this case vanadium picolinate, which can convert ferric ions to ferrous ions. The process has been designed for specific application in General Electric designed reactor systems. The LOMI™ process is applied with an oxidizing step, usually an NP process.

Electricité de France (EdF) developed the EMMA™ process which relies on the alternate use of an oxidizing step to oxidize Cr(III) to Cr(VI), and a reducing step to dissolve the remaining residual oxide. The oxidizing step of the EMMA™ process uses a solution consisting of potassium permanganate (4.4-6.3 mM, 0.7-1.0 g/L), nitric acid (2.1 mM, 0.13 g/L), and sulphuric acid (0.5 mM, 0.05 g/L), applied for 10-15 hours at pH of 2.5-2.7 at 80°C. The reducing step uses citric acid (2.6 mM, 0.5 g/L) and ascorbic acid (4.0-5.7 mM, 0.7-1.0 g/L) applied for 5 hours at a pH of 2.7-3.0 at 80°C.

Despite the existence of other decontamination reagents, there remains a need for a process with improved compositions for better regenerability and efficacy that can be applied in the decontamination of Pressurized Heavy Water Reactors (PHWRs), as well as PWRs and BWRs.

This background information is provided for the purpose of making known information believed by the applicant to be of possible relevance to the present invention. No admission is necessarily intended, nor should be construed, that any of the preceding information constitutes prior art against the present invention.

SUMMARY OF THE INVENTION

An object of the present application is to provide a reactor decontamination process and a reagent for use in a decontamination system.

A dilute decontaminating reagent composition comprising from about 0.6 to about 3.0 g/L (2.1-10.3 mM) EDTA and from about 0.4 to about 2.2 g/L (2.1-11.5 mM) citric acid. The reagent containing citric acid and EDTA at these concentrations can be used effectively in a regenerative process to decontaminate a nuclear reactor, or a component of thereof, with high efficiency without causing significant corrosion to the components of the cooling systems. Additionally, the process of the present invention provides a higher Decontamination Factor (DF) within a shorter application time than the previous CAN-DEREM™ process. Without wishing to be bound by theory, this is likely due to the absence of oxalic acid in the reagent. In this way, the intergranular attack (IGA) of sensitized stainless steel systems is avoided and the formation and precipitation of iron oxalate is avoided. The reagent has been found to be useful in decontamination of the cooling systems of carbon steel and stainless steel nuclear reactors.

In accordance with an aspect of the present invention, there is provided a decontamination system as set out in claim 1.

In accordance with another aspect of the present invention, there is provided a process of decontaminating a primary heat transport, cooling, or water transport system of a CANDU reactor as set out in claim 7. This process demonstrates an improvement over previous decontamination processes, including the CAN-DEREM™ process, in reducing the amount of time required for decontamination, which leads to reduced shut-down times.

In accordance with the present invention, the process includes the step of injecting the decontamination reagent as a slurry into the heat transport or cooling system of a nuclear reactor that has been shut down. The water coolant is circulated as the decontaminating reagents are diluted and come into contact with the surfaces being decontaminated, dissolving the radioactive contaminants from the surface of the system. Shortly after the circulation of the reagent has started, a strong acid cation ion exchange resin column is valved-in and the water coolant solution is passed through the column to remove radioactive cations and dissolved elements. The reagent is then regenerated and subsequently recirculated so that the decontamination reagent can dissolve more metals and radionuclides from the coolant system. When the desired decontamination factor (DF) has been achieved, the solution is passed through a mixed bed ion exchange resin to capture the residual dissolved metals, radionuclides, and decontamination reagents from the system, thus restoring the coolant to normal.

DESCRIPTION OF THE DRAWINGS

Figure 1 Concentration of dissolved Fe in solution (Before the Ion Exchange resin column (BIX) and After the Ion Exchange resin column (AIX)) using the CAN-DEREM™ process.

Figure 2 Concentrations of Fe in solution (BIX) and after ion exchange resin using the process of the present invention.

Figure 3 The total radionuclide released into solution (BIX) and removed from solution (AIX) during the CAN-DEREM™ process.

Figure 4 The total radionuclide released into solution (BIX) and removed from solution (AIX) during the process of the present invention.

DETAILED DESCRIPTION

Unless defined otherwise, all technical and scientific terms used herein have the same meaning as commonly understood by one of ordinary skill in the art to which this invention belongs.

As used in the specification and claims, the singular forms "a", "an" and "the" include plural references unless the context clearly dictates otherwise.

The term "comprising" as used herein will be understood to mean that the list following is non-exhaustive and may or may not include any other additional suitable items, for example one or more further feature(s), component(s) and/or ingredient(s) as appropriate.

As used herein, the term "Decontamination Factor" or "DF" is intended to refer to a measurement of the effectiveness of a decontamination reagent and/or method at removing radionuclides from a nuclear primary heat transport or cooling system. The DF is measured as the quotient of the radiation fields before and after decontamination for selected systems and locations in the plant. The total activity removed from a system is determined by converting the activity released into the solution in units of activity per unit volume (which is monitored during the decontamination) to activity, as the system volume is known.

As used herein the term "high oxide loading" is intended to refer to higher than 20 $g/m^2$.

As used herein the term "high radionuclide loading" is intended to refer to higher than 10 $mCi/m^2$.

It has now been found that a dilute decontamination reagent of the present invention which comprises EDTA and citric acid at concentrations of from about 0.6-3.0 g/L (2.1-10.3 mM) of EDTA and 0.4-2.2 g/L (2.1-11.5 mM) of citric acid is efficient at decontaminating high oxide loading and high radionuclide loading in nuclear reactors. The dilute decontamination reagent of the present invention is used under non-oxidizing conditions.

Within the above recited ranges, the preferred concentrations of EDTA and citric acid for any decontamination application are selected depending on the objectives of the decontamination. In accordance with a preferred embodiment of the present invention, the dilute decontamination reagent contains EDTA at a concentration of 1.5-2.2 g/L (5.1-7.5 mM) and citric acid at a concentration of 1.8-2.2 g/L (9.5-11.6 mM).

Within the above recited ranges, the preferred concentrations of EDTA and citric acid for any decontamination application are selected depending on the objectives of the decontamination. In accordance with a preferred embodiment of the present invention, the dilute decontamination reagent contains EDTA at a concentration of about 1.8 g/L (6.2 mM) and citric acid at a concentration of about 2 g/L (10.4 mM).

The decontamination reagents of the present invention can additionally comprise a corrosion inhibitor. One example of a suitable corrosion inhibitor is Rodine™ 31A. Preferably, the corrosion inhibitor is sulphur and halide free corrosion inhibitor mixture.

In particular applications, 50-225 mg/L of Rodine 31A™ as a corrosion inhibitor, and 20-100 mg/L of hydrazine, as reducing agent and oxygen scavenger can be added.

Several parameters will have direct impact on reagent concentrations, including system volume and surface area, materials of construction, whether decontamination is performed in light or heavy water, the estimated oxide loading, the need for the use of a corrosion inhibitor, the need for the use of a reducing agent, the desired decontamination factors, and the decontamination equipment type, size and capabilities. The decontamination equipment pump size, the flow rate through the system, purification half-life, the use of external heaters, etc., will all have an impact on the effectiveness of the process and thus influence the concentrations of reagent required.

In comparison with the previous CAN-DECON™ and CAN-DEREM™ processes, the process of the present invention employs a higher concentration of reagents, which has now been found to result in faster dissolution of deposit and faster release of metals and radionuclides into solution. In the process of the present invention, the dissolved metals and radionuclides are subsequently removed from the solution using a purification system. An efficient purification system, i.e., a purification system with a short half-life, improves the decontamination factor obtained.

The process of the present invention includes the step of injecting a concentrated decontamination reagent into the heat transport or cooling or water transport system of a nuclear reactor. The concentrated decontamination reagent includes EDTA and citric acid in a slurry and at a concentration sufficient to form a dilute decontamination reagent in the coolant in which the concentration of EDTA and citric acid are in the range of from about 0.6-3.0 g/L (2.1-10.3 mM) and 0.4-2.2 g/L (2.1-11.5 mM), respectively.

Because of the low solubility of EDTA at low pH values and the volume of reagent used for injection, the concentrated reagent has to be added in the form of a slurry. The concentration of the EDTA and citric acid in the concentrated decontamination reagent is determined based on the volume of the reactor, or component thereof, to be decontaminated and the volume of reagent that can be injected. The injection volume is typically dictated by the volume of the injection tank or system used with the nuclear reactor to be decontaminated. The concentration of the EDTA in the concentrated reagent is determined using the following calculation:

$$\text{Concentration of EDTA in concentrated reagent} = (C_{EDTA} \times V_S) \div V_I$$

where:

$C_{EDTA}$ is the concentration of EDTA in the dilute decontamination reagent (i.e., from about 0.6 to about 3.0 g/L);
$V_S$ is the volume of the reactor, or component thereof, to be decontaminated; and
$V_I$ is the volume of the concentrated decontamination reagent to be injected.

Similarly, the concentration of the citric acid in the concentrated reagent is determined using the following calculation:

$$\text{Concentration of citric acid in concentrated reagent} = (C_{CA} \times V_S) \div V_I$$

where:

$C_{CA}$ is the concentration of citric acid in the dilute decontamination reagent (i.e., from about 0.4 to about 2.2 g/L);
$V_S$ is the volume of the reactor, or component thereof, to be decontaminated; and
$V_I$ is the volume of the concentrated decontamination reagent to be injected.

The water coolant is circulated as the components of the concentrated decontaminating reagent are diluted to form the dilute decontamination reagent. The dilute decontamination reagent is then circulated and comes into contact with the surfaces being decontaminated, dissolving the radioactive contaminants from the surface of the system. Shortly after the circulation of the decontamination reagent has started, the cation exchange resin column is valved-in and the coolant solution is passed through the column to remove radioactive cations and dissolved elements. The dilute decontamination reagent is regenerated as it flows through the cation exchange resin and subsequently recirculated so that the dilute decontamination reagent can dissolve more radionuclides from the system. When the desired DF has been achieved, the coolant solution is passed through a mixed bed ion exchange resin (e.g., IRN150) to remove the residual dissolved metals, radionuclides and decontamination reagent components from the system, thus restoring the coolant to its normal composition. This is sometimes referred to as the "clean-up" step of the process.

The concentrated decontamination reagent can contain additional EDTA used for conditioning the cation exchange resin. As would be appreciated by a worker skilled in the art, the amount of EDTA required for conditioning the resin is, in part, determined by the type (or efficiency) and amount of resin used in the decontamination process. The amount of resin used in the process is determined based on the amount of iron oxides and radionuclides estimated to be present in the reactor or reactor component to be decontaminated. The estimated amounts of iron oxides and radionuclides can be determined using standard techniques using representative sections obtained from the tubes of the reactor or reactor component to be decontaminated.

The cation ion exchange resin used is a strong acid cation resin (e.g., IRN77), while the mixed bed exchange resin is generally a mixture of strong and weak anionic, and strong acid cationic resins as some organic components are more efficiently removed on a weak anionic resin. The ion exchange resins are spent as close to their capacity as possible. The total volume of the ion exchange resin is determined in advance of decontamination based on the expected concentration of dissolved metals and radionuclides, and on the per unit capacity and efficiency of the ion exchange resin. An effluent of dissolved iron and $^{60}$Co at the column outlet indicates when the cation column is spent. Another method of identifying that the column is spent is if the concentrations of dissolved elements or radionuclides in the column outlet are higher than in the column inlet, i.e., if column breakthrough has occurred. Once spent, the spent column is valved-out and a new column containing fresh cation ion exchange resin is valved-in. The spent ion exchange resins are disposed of, or stored as a solid waste material.

The decontamination process and system of the present invention can be used with fuel in the reactor core. In an exemplary embodiment, the process and system of the present invention is used during shutdown or in decommissioning of a reactor.

The decontamination capacity of a decontamination reagent and its compatibility with system materials are the most important elements in the selection of a decontamination reagent for a specific application. The CAN-DEREM™ reagent had been used to decontaminate steam generators at the Beaver Valley, a PWR wherein a relatively thin oxide layer, estimated to be between 8 to 20 g/m$^2$, was present on the Inconel™-600 steam generator tubes. A five step Alkaline Permanganate (AP) / CAN-DEREM™ process was successfully used during decontamination. The AP step is an oxidizing step that is required for a system made of stainless steel, such as PWR, to convert the insoluble Cr(III) to soluble Cr(VI). An oxidizing step (AP, HP or NP) is utilized in all PWR decontaminations.

However, the CAN-DEREM™ reagent is not suitable for use in the decontamination of the CANDU steam generators as the capacity of the reagent is too low. In one case it was estimated that there was 100 g/m$^2$ of oxide on the inside surfaces of the steam generator tubes of this particular reactor.

In contrast, the decontamination reagent, process and system of the present invention is useful for the primary side decontamination of the steam generators in CANDU reactors due to its high capacity and efficiency. Furthermore, the decontamination reagent, process and system of the present invention does not cause significant corrosion to the components of the cooling systems.

To gain a better understanding of the invention described herein, the following examples are set forth. It should be understood that these examples are for illustrative purposes only. Therefore, they should not limit the scope of this invention in any way.

## EXAMPLES

Qualification work prior to an application using the decontamination reagent of the present invention and using representative materials of construction should be carried out. Corrosion of different materials should be determined in several concentrations of reagents with and without corrosion inhibitor. As such, an assessment of the compatibility of a reagent with steam generator materials is the key component of the reagent qualification program.

The compatibility of primary side steam generator materials with the dilute decontamination reagent of the present invention was evaluated in a series of loop runs. In addition, bench-top tests were carried out to simulate static and low flow conditions in the steam generator bowl.

### EXAMPLE 1

A series of bench top corrosion tests under static conditions were performed to determine corrosion rates of Monel-400 and SA106 Gr. B carbon steel in various decontamination reagents. Monel-400 is the material used for steam generator tubes in some CANDU steam generators, and SA106 Gr. B is the material used for feeder pipes and headers in all CANDU reactors. Both materials are susceptible to corrosion under acidic conditions. These corrosion tests were performed at 90°C under a nitrogen atmosphere. A corrosion inhibitor was not added to the reagents in these tests to obtain conservative corrosion values. Two different concentrations of citric acid (2 g/L and 20 g/L) were tested in the presence of 1.8 g/L of EDTA. The average corrosion rates, based on weight loss measurements during the 24 hour tests, are summarized in Table 1.

Table 1: Corrosion Rates ($\mu$m/h) of Monel-400 and SA106 Gr. B Carbon Steel after Exposure to Reagent Formulations

| Test Solution | Monel-400 ($\mu$m/h) | SA106 Gr. B ($\mu$m/h) |
|---|---|---|
| CAN-DEREM™ (0.4 g/L citric acid, 0.6 g/L EDTA) | 0.0007 | 0.51 |
| A. 2 g/L citric acid, 1.8 g/L EDTA | 0.0004 | 2.13 |
| B. 20 g/L citric acid, 1.8 g/L EDTA | 0.002 | 11.3 |
| C. 100 g/L EDTA, pH 9 | 0.018 | 0.14 |

From the data in Table 1, it can be seen that corrosion of Monel-400 was low in all reagents tested. In acidic reagent formulations, the corrosion rate of SA106 Gr. B carbon steel increased with reagent concentration. Although corrosion of SA106 Gr. B was lower using CAN-DEREM™ than using test solution A, the latter reagent has a higher capacity for removing oxide and radionuclides during decontamination. The corrosion rate in 100 g/L EDTA (pH 9) was low, but this formulation was discounted on the basis that it was not as effective for oxide dissolution.

EXAMPLE 2

Various reagent formulations were evaluated in the loop runs and bench top tests. Parameters that were examined included Rodine™ 31A, a commercial corrosion inhibitor (0, 100 mg/L, 225 mg/L), hydrazine concentration (0 and 20 mg/L), and pH (2.2 and 3.5). Hydrazine is a reducing agent and is also used as an oxygen scavenger. In addition, in some tests, dissolved iron (Fe), nickel (Ni) and copper (Cu) were added to the reagent to simulate faulted chemistry. The corrosion rates of Monel-400 and SA106 Gr. B carbon steel materials exposed to two such solutions during the loop runs are summarized in Table 2.

Table 2: The Corrosion Rate ($\mu$m/h) of Materials in Two Loop Tests

| Test Solution | Monel-400 ($\mu$m/h) | SA106 Gr. B ($\mu$m/h) |
|---|---|---|
| A. 2 g/L citric acid, 1.8 g/L EDTA with 100 mg/L of Rodine™ 31A and 20 mg/L of hydrazine | 0.10±0.01 | 0.79±0.05 |
| B. 2 g/L citric acid, 1.8 g/L EDTA with Fe/Ni/Cu | 0.13±0.01 | 20.2±6.1 |

During the loop tests, the linear velocity of the reagent through the test section which contained the corrosion coupons was 3.65 m/s. The corrosion rate of Monel-400 was higher in loop tests than under static conditions of the bench top tests but was still very low. Corrosion of SA106 Gr. B using test solution A was lower than in the bench top test in which no corrosion inhibitor was used. Corrosion of SA106 Gr. B in uninhibited test solution B, which also contained ferric ions, giving rise to ferric ion corrosion, was much higher than in the inhibited solution.

EXAMPLE 3

Loop runs and bench top tests were complemented by electrochemical investigation of Monel-400 and carbon steel corrosion in the reagent containing 2 g/L citric acid and 1.8 g/L EDTA (the "dilute decontamination reagent"). The compatibility of steam generator materials, steam generator welds and stressed carbon steel specimens were evaluated to determine the extent of general corrosion of Monel-400 and primary side steam generator materials, and localized corrosion damage, e.g., cracking, pitting, intergranular attack, etc.

Disc electrodes machined from a section of a feeder pipe made of SA106 Gr. B, and cylindrical Monel-400 electrodes prepared from Monel-400 rod, were used for the corrosion studies of carbon steel and Monel-400, respectively. The electrodes were rotated at either 1500 or 2000 rpm during the potential scan experiments to promote mass-transport to and from the electrode. A jacketed glass electrochemical cell, heated by a recirculating water bath passing through the jacket around the cell, was used for these studies. Measurements of the corrosion rates of SA106 Gr. B and Monel-400 were accomplished using two different procedures that provided equivalent results. In tests 1 through 11 (see Table 3), a PAR-173/276 potentiostat was used to control and systematically vary the potential of the metal electrodes. The potentials of the metal electrodes were measured with respect to a Ag/AgCl reference electrode. At each value of the potential applied to the metal electrode, the net electrode current was measured. The metal electrodes were polarized to the negative limit of the scan, -1000 mV versus Ag/AgCl. The potential was changed at a rate of 0.5 mV/s, until the positive limit of the scan was reached, 1000 mV versus Ag/AgCl. In tests 12 through 14 (see Table 3), a PINE AFRDE-4 potentiostat was used to control and systematically vary the potential of the electrode. Initially the open circuit potential ($E_{oc}$) was measured. Starting at $E_{oc}$, the electrode was progressively polarized to more negative potentials. After reaching the negative scan limit, the electrode was returned to $E_{oc}$. The electrode was then progressively polarized to more positive potentials, until the positive scan limit was achieved. During these experiments the potential was changed in 20 mV increments. At each potential the steady-state net current was measured. Data from the above tests were presented as semi-logarithmic plots of absolute net current density versus potential, commonly known as Tafel plots, and current densities were converted into corrosion rates as shown in Table 3. The extent of localized corrosion damage, e.g., cracking, pitting, intergranular attack, etc, were determined by detailed examination of metallographic cross-sections of the specimens after exposure to dilute decontamination reagent in the loop runs.

The corrosion results obtained from electrochemical tests varying the concentration of hydrazine, the starting pH and the application temperature are summarized in Table 3. In some tests, 100 mg/L of ferric ions were added to simulate faulted chemistry conditions. Table 3 gives test conditions used and a summary of corrosion of SA106 Gr. B and Monel™-400.

Table 3: Electrochemical Tests to Determine Corrosion Rates of SA106 Gr. B and Monel-400 (All Test Solutions Contained 1.8 g/L of EDTA and 2.0 g/L of Citric Acid)

| Test # | Alloy tested | Rodine™ 31A (mg/L) | Hydrazine (mg/L) | Ferric ion (mg/L) | pH | Temp. (°C) | Corrosion Rate (μm/h) |
|---|---|---|---|---|---|---|---|
| 1 | SA106 Gr. B | 100 | 20 | - | 2.25 | 92±1 | 0.21 |
| 2 | SA106 Gr. B | 100 | 20 | - | 3.21 | 92±1 | 0.10 |
| 3 | SA106 Gr. B | 100 | 200 | - | 3.24 | 92±1 | 0.22 |
| 4 | SA106 Gr. B | 1000 | 200 | - | 3.20 | 92±1 | 0.13 |
| 5 | SA106 Gr. B | 100 | 20 | 100 | 3.20 | 92±1 | 8.4 |
| 6 | SA106 Gr. B | 100 | 200 | 100 | 3.22 | 92±1 | 6.7 |
| 7 | SA106 Gr. B | - | 20 | - | 2.31 | 92±1 | 1.1 |
| 8 | SA106 Gr. B | - | 20 | - | 3.22 | 92±1 | 3.4 |
| 9 | SA106 Gr. B | 100 | 200 | - | 3.24 | 82±1 | 0.05 |
| 10 | Monel-400 | 100 | 200 | - | 3.24 | 82±1 | 0.07 |
| 11 | Monel-400 | 100 | 200 | - | 3.22 | 92±1 | 0.01 |
| 12 | Monel-400 | 100 | - | - | 2.25 | 92±1 | 0.06 |
| 13 | Monel-400 | 100 | 20 | - | 2.25 | 92±1 | 0.01 |
| 14 | SA106 Gr. B | 100 | 20 | - | 2.25 | 92±1 | 0.69 |

EXAMPLE 4

During decontamination of reactors with high oxide loading, substantial amount of ferric ions can be released to solution. Bench top tests were performed to assess the effects of ferric ion on carbon steel under low flow conditions. Tests were performed for 5 and 48 hours at 90°C. The concentrations of ferric ions used were 133 and 266 mg/L. The results of the bench top tests are summarized in Table 4. Corrosion rates were an order of magnitude lower in the bench top tests than in the potential scan tests where mass transport was more efficient.

Table 4: Corrosion Rate ($\mu$m/h) of SA106 Gr. B in the Presence of Ferric Ion in Solutions Containing 1.8 g/L of EDTA and 2.0 g/L of Citric Acid

| Test # | Test Duration (h) | Total Iron Concentration (mg/L) | Ferric Ion Concentration (mg/L) | SA106 Gr. B Corrosion Rate ($\mu$m/h) |
|---|---|---|---|---|
| 1 | 5 | 0 | 0 | 0.045±0.005 |
| 2 | 5 | 0 | 0 | 0.06±0.02 |
| 3 | 5 | 200 | 133 | 0.55±0.4 |
| 4 | 5 | 200 | 133 | 0.53±0.06 |
| 5 | 48 | 0 | 0 | 0.033±0.003 |
| 6 | 5 | 400 | 266 | 0.44±0.03 |
| 7 | 48 | 200 | 133 | 0.26±0.05 |
| 8 | 48 | 200 | 133 | 0.16±0.012 |

Depending on the objectives of the decontamination, adjustments are made to the formulation and application time depending on the materials of construction and the remaining corrosion allowances for a nuclear plant system. In addition, during application, the reagent concentration and dissolved metals are monitored to ensure decontamination is progressing as planned.

During the decontamination, hydrogen gas can be generated as the result of corrosion of carbon steel components. The rate of gas formation depends on many factors, such as whether a corrosion inhibitor is used and its concentration, the available bare carbon steel surface area, and the operating pH and temperature. During decontamination degassers are used to remove gases.

As noted above, during the qualification of the process for a specific application, pH is determined. The operating pH is not adjusted during the application. However, the addition of reagent can have an impact on the system pH. System pH becomes acidic after the reagent has been introduced, circulated and the cation ion exchange resin is valved-in. As dissolved metals and radionuclides are removed on the cation resin, the solution is initially acidic as the protons from the cation resin are introduced into the coolant. Over time, however, the pH starts to increase as more of the reagents form complexes with dissolved metals and radionuclides. The pH can vary between 2.2 to 4.5 toward the completion of the decontamination process.

The dilute decontamination reagent in the system of the present invention can be applied in the temperature range of 80 to 120°C. The reagent is stable and effective for use in this temperature range. The application temperature is another parameter that is finalized during qualification of the process. In general the dissolution and corrosion rates increase with increases in temperature. If the process is used at higher temperatures, this should not have any impact on the effectiveness of ion exchange resin, as the reagent going through the purification system is cooled initially before going through the ion exchange resin column.

The duration of the decontamination using dilute decontamination reagent in the system of the present invention is dictated by the system volume, oxide loading, radionuclide inventory, corrosion limits and other application conditions. The rate of oxide dissolution in the decontamination process of the present invention is much faster than for example, in the CAN-DEREM™ process. However, the actual duration depends on the effectiveness of the purification system.

During the decontamination, the crud released is partially removed by filtration up stream of the purification system and partially by the ion exchange resin columns.

## Example 5

The process of the present invention was compared to the CAN-DEREM™ process in two tests conducted using sections of steam generator tubes from a CANDU® reactor.

The steam generator tube sections, each 6 cm long, were filled with the decontamination reagents, capped at one end and immersed in a water bath maintained at 90°C. The reagents were left in the tube sections for a duration of 15 minutes, after which the reagents were sampled and analyzed. The initial and final pH and the concentrations of dissolved iron were measured. In addition, an estimate of the oxide loading using the two reagents was made. The results summarized in Table 5 show that process of the present invention has a 2.6 times higher capacity compared to CAN-DEREM™.

Table 5: Results of Static Decontamination of Steam Generator Tube Sections Removed from a CANDU Reactor

| Reagent | Initial pH | Final pH | Iron Concentration (mg/L) | Oxide Removed in 15 min (g/m$^2$) |
|---|---|---|---|---|
| CAN-DEREM™ | 2.71 | 3.76 | 107 | 0.625 |
| 1.8 g/L EDTA + 2.0 g/L Citric Acid | 2.35 | 3.34 | 282 | 1.65 |

### Example 6

The process and composition of the present invention were compared to CAN-DEREM™ during the decontamination of sections of inlet feeder pipe from a CANDU reactor. The decontamination involved the use of a three-step process consisting of two reducing steps and one alkaline permanganate (AP) oxidizing step. The data summarized in Table 6 show the average oxide loading (g/m$^2$), the overall DF values and the percentage activity removed (%AR) using the two processes. The decontamination factors and the percentage activity removed were calculated using Equations (1) and (2).

$$DF = \text{Initial Activity} / \text{Final Activity} \qquad \text{(Equation 1)}$$

$$\%AR = [1\text{-}(\text{Final Activity} / \text{Initial Activity})] \times 100 \qquad \text{(Equation 2)}$$

Table 6: Results of the Decontamination of Inlet Feeder Pipe Sections Removed from a CANDU Reactor

| Process | Oxide Loading (g/m$^2$) | DF | %AR |
|---|---|---|---|
| CAN-DEREM™ /AP/CAN-DEREM™ | 2781±648 | 544±214 | 99.79±0.10 |
| (1.8 g/L EDTA + 2.0 g/L Citric Acid) /AP/(1.8 g/L EDTA + 2.0 g/L Citric Acid) | 4827±1230 | 5205±1040 | 99.98±0.0 |

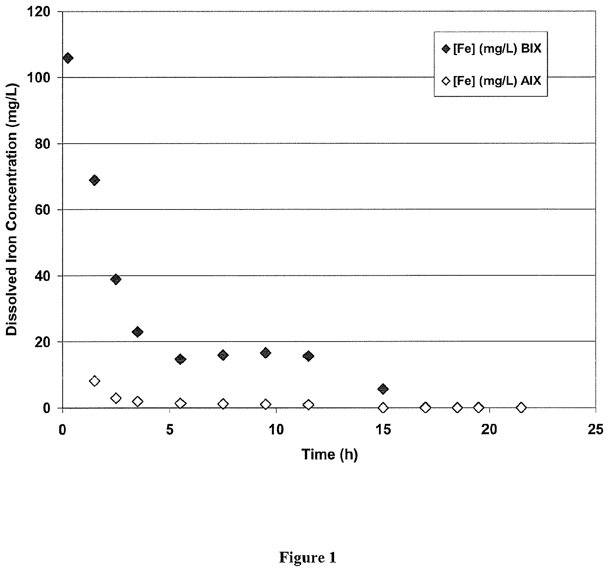

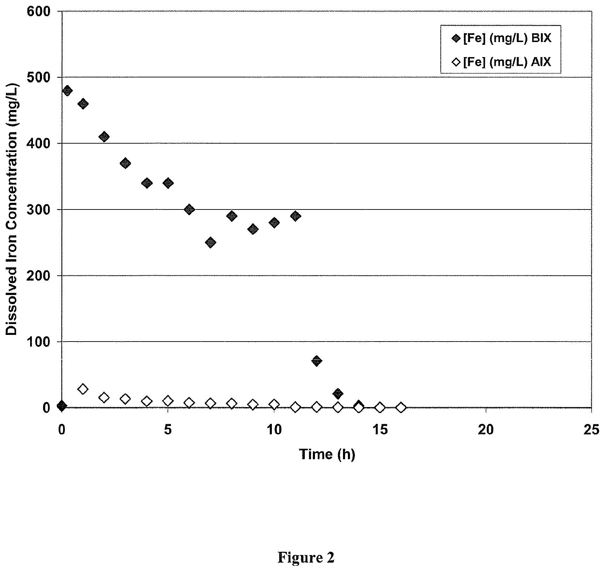

Figure 1 and Figure 2 compare the concentration of dissolved Fe in the solution (shown as BIX) and the concentration of dissolved iron removed on the ion exchange resin (AIX) during the two processes. During the application of CAN-DEREM™ (Figure 1), the highest concentration of dissolved iron was 106 mg/L. The concentration of dissolved Fe dropped quickly as the ion exchange resin containing strong cation resin was valved-in.

In Figure 2, the concentrations of Fe in solution (BIX) and after the ion exchange resin column (AIX) using the process and reagent of the present invention, are shown. During this process the initial iron concentration was 480 mg/L. The iron from solution was quickly removed shortly after the ion exchange resin column containing strong acid cation resin was valved-in.

By comparison of Figure 1 and Figure 2, it is apparent that process of the present invention was approximately 4.5 times more effective for dissolving iron than the CAN-DEREM™ process. It should be noted that in the CAN-DEREM™ process, the concentrations of EDTA and citric acid were 600 and 400 mg/L, respectively. The concentrations of EDTA and citric acid in the process of the present invention were 1,800 and 2,000 mg/L, respectively. In addition, a corrosion inhibitor mixture and a reducing agent were also used in the CAN-DEREM™ process.

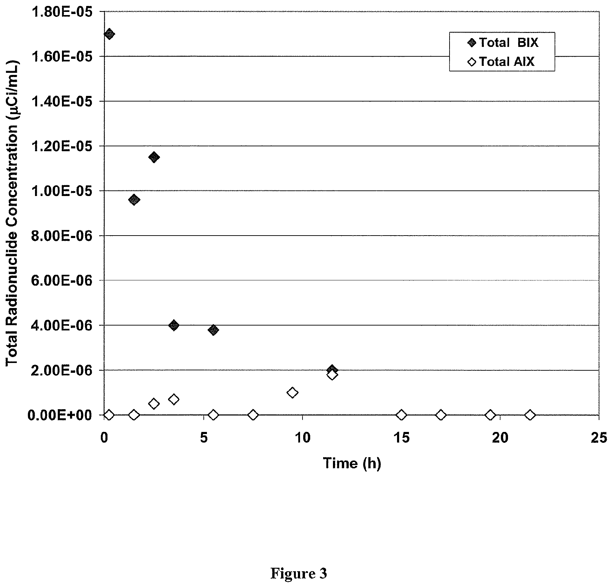

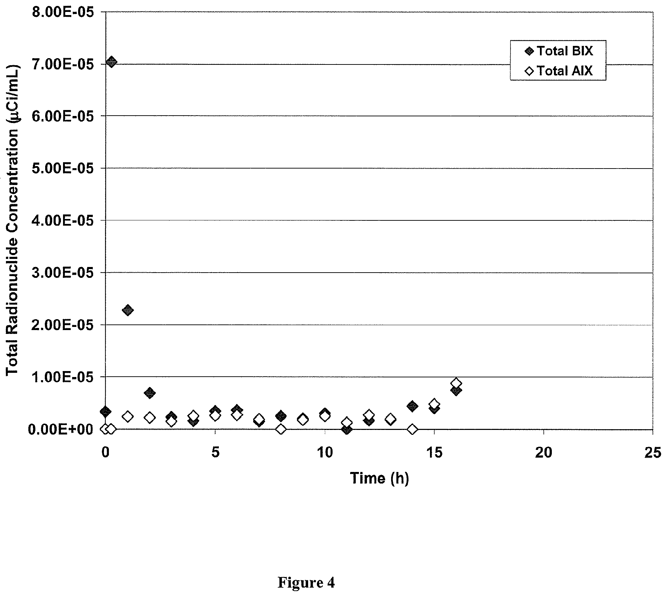

In Figure 3 and Figure 4, the total radionuclides released into solution (BIX) and removed from the solution during the CAN-DEREM™ and processes of the present invention were compared. The total radionuclide concentrations removed during these processes were $1.7 \times 10^{-5}$ µCi/mL and $7.0 \times 10^{-5}$ µCi/mL, respectively, i.e., the total radionuclide concentration removed during the present process was a factor of four times higher than that in the CAN-DEREM™ step.

The invention being thus described, it will be obvious that the same may be varied within the scope of the following claims.

**Claims**

1. A decontamination system, comprising:

   - a CANDU reactor having a primary heat transport, cooling or water transport system to be decontaminated having a volume $V_S$;
   - an injection tank having a volume $V_I$, wherein the injection tank contains a concentrated decontamination reagent for decontamination of the primary heat transport, cooling or water transport system of the CANDU reactor, wherein said concentrated decontamination reagent is an aqueous slurry comprising EDTA and citric acid, wherein the concentration of the EDTA and citric acid in the concentrated decontamination reagent is determined based on the volume $V_S$ of the primary heat transport, cooling or water transport system of the CANDU reactor to be decontaminated and the volume $V_I$ of reagent that can be injected, wherein said aqueous slurry comprising EDTA at a concentration of ((about 0.6 to about 3.0 g/L) $\times V_s$) $\div V_I$ and citric acid at a concentration of ((about 0.4 to about 2.2 g/L) $\times V_s$) / $V_I$.

2. The decontamination system according to claim 1,
   wherein the ratio of EDTA : citric acid is between 1.5:1 and 3:1 by weight.

3. The decontamination system according to any one of claims 1 and 2,
   wherein the concentrated decontamination reagent additionally comprises a corrosion inhibitor,
   wherein the corrosion inhibitor is preferably either Rodine™ 31A or a sulphur and halide free corrosion inhibitor mixture.

4. The decontamination system according to any one of claims 1 to 3,
   wherein the concentrated decontamination reagent additionally comprises an oxygen scavenger,
   wherein the oxygen scavenger is preferably hydrazine.

5. The decontamination system according to any one of claims 1 to 4,
   wherein the concentrated decontamination reagent additionally comprises a reducing reagent.

6. The decontamination system according to any one of claims 1 to 5,
   wherein the concentration of EDTA is ((about 1.8 g/L) $\times V_s$) $\div V_I$ and the concentration of citric acid is ((about 2.0 g/L) $\times V_s$) $\div V_I$.

7. A process of decontaminating a primary heat transport, cooling, or water transport system of a CANDU reactor comprising:

   - determining an injection volume $V_i$ of a decontamination reagent that can be injected into circulating coolant in said system;
   - determining a system volume $V_s$ of said system;
   - determining a concentration of EDTA and a concentration of citric acid for a concentrated decontamination reagent, wherein said concentration of EDTA is ((about 0.6 to about 3.0 g/L) $\times$ Vs) $\div$ VI and said concentration of citric acid is ((about 0.4 to about 2.2 g/L) $\times$ Vs) / VI.
   - injecting said injection volume $V_i$ of said concentrated decontamination reagent into the circulating coolant in said system to form a dilute reagent solution in which EDTA is present at a concentration of from about 0.6 to about 3.0 g/L and citric acid is present at a concentration of from about 0.4 to about 2.2 g/L, wherein said concentrated decontamination reagent is injected as an aqueous slurry;
   - circulating said dilute reagent solution to dissolve contaminated deposits therein;
   - passing said dilute reagent solution through a cationic exchange resin to collect dissolved cations and radionuclides, to regenerate said dilute reagent solution;
   - recycling said regenerated reagent solution through said system; and
   - passing said dilute reagent solution through mixed bed ion exchange resin to remove said decontamination reagent from said system.

8. The process according to claim 7,
   wherein the ratio of EDTA : citric acid in said dilute reagent solution is between 1.5:1 and 3:1 by weight.

9. The process according to any one of claims 7 and 8,

wherein said decontamination reagent also comprises a corrosion inhibitor,
wherein the corrosion inhibitor is either Rodine 31A or a sulphur and halide free corrosion inhibitor mixture.

10. The process according to any one of claims 7 to 9,
wherein said decontamination reagent also comprises an oxygen scavenger,
wherein the oxygen scavenger is preferably hydrazine.

11. The process according to any one of claims 7 to 10,
wherein said decontamination reagent also comprises a reducing reagent.

12. The process according to any one of claims 7 to 11 wherein said dilute reagent solution comprises EDTA at concentration of about 1.8 g/L and citric acid at a concentration of about 2.0 g/L.

13. The process according to any one of claims 7 to 12,
wherein the CANDU reactor is shut down.


**Patentansprüche**

1. Dekontaminierungssystem, welches Folgendes umfasst:

- CANDU-Reaktor, welcher ein zu dekontaminierendes primäres Wärmetransport-, Kühl- oder Wassertransportsystem mit einem Volumen $V_S$ aufweist;
- Einspritztank mit einem Volumen $V_I$, wobei der Einspritztank ein konzentriertes Dekontaminierungsreagens zur Dekontaminierung des primären Wärmetransport-, Kühl- oder Wassertransportsystems des CANDU-Reaktors enthält, wobei das genannte konzentrierte Dekontaminierungsreagens ein EDTA und Zitronensäure enthaltender, wässriger Brei ist, wobei die Konzentration der EDTA und der Zitronensäure im konzentrierten Dekontaminierungsreagens basierend auf dem Volumen $V_S$ des primären Wärmetransport-, Kühl- oder Wassertransportsystems des zu dekontaminierenden CANDU-Reaktors und auf dem Volumen $V_I$ des Reagens, das eingespritzt werden kann, ermittelt wird,
wobei der genannte wässrige Brei EDTA in einer Konzentration von $((\text{ungefähr } 0,6 \text{ bis ungefähr } 3,0 \text{ g/L}) \times V_S) \div V_I$ und Zitronensäure in einer Konzentration von $((\text{ungefähr } 0,4 \text{ bis ungefähr } 2,2 \text{ g/L}) \times V_S) / V_I$ enthält.

2. Dekontaminierungssystem gemäß Anspruch 1,
wobei das Gewichtsverhältnis der EDTA zur Zitronensäure zwischen 1.5:1 und 3:1 ist.

3. Dekontaminierungssystem gemäß einem der Ansprüche 1 und 2,
wobei das konzentrierte Dekontaminierungsreagens zusätzlich einen Korrosionsinhibitor enthält, wobei der Korrosionsinhibitor vorzugsweise entweder Rodine™ 31A oder eine schwefel- und halogenidfreie Korrosionsinhibitor-Mischung ist.

4. Dekontaminierungssystem gemäß einem der Ansprüche 1 bis 3,
wobei das konzentrierte Dekontaminierungsreagens zusätzlich einen Sauerstofffänger enthält, wobei der Sauerstofffänger vorzugsweise Hydrazin ist.

5. Dekontaminierungssystem gemäß einem der Ansprüche 1 bis 4,
wobei das konzentrierte Dekontaminierungsreagens zusätzlich ein Reduktionsmittel enthält.

6. Dekontaminierungssystem gemäß einem der Ansprüche 1 bis 5,
wobei die EDTA-Konzentration $((\text{ungefähr } 1,8 \text{ g/L}) \times V_S) \div V_I$, und die Zitronensäurekonzentration $((\text{ungefähr } 2,0 \text{ g/L}) \times V_S) \div V_I$ ist.

7. Verfahren zur Dekontaminierung eines primären Wärmetransport-, Kühl- oder Wassertransportsystems eines CANDU-Reaktors, welches Folgendes umfasst:

- Ermittlung eines Einspritzvolumens $V_i$ eines Dekontaminierungsreagens, welches in ein zirkulierendes Kühlmittel im genannten System eingespritzt werden kann;
- Ermittlung eines Systemvolumens $V_s$ des genannten Systems;

- Ermittlung einer EDTA-Konzentration und einer Zitronensäurekonzentration für ein konzentriertes Dekontaminierungsreagens, wobei die genannte EDTA-Konzentration ((ungefähr 0,6 bis ungefähr 3,0 g/L) $^x$ Vs) ÷ VI, und die genannte Zitronensäurekonzentration ((ungefähr 0,4 bis ungefähr 2,2 g/L) $^x$ Vs) / VI ist.
- Einspritzung des genannten Einspritzvolumens $V_i$ des genannten konzentrierten Dekontaminierungsreagens in das zirkulierende Kühlmittel im genannten System zur Bildung einer verdünnten Reagenslösung, in welcher EDTA in einer Konzentration von ungefähr 0,6 bis ungefähr 3,0 g/L, und Zitronensäure in einer Konzentration von ungefähr 0,4 bis ungefähr 2,2 g/L vorhanden ist, wobei das genannte Dekontaminierungsreagens als wässriger Brei eingespritzt wird;
- Zirkulation der genannten verdünnten Reagenslösung zur Auflösung darin enthaltener kontaminierter Ablagerungen;
- Passieren der genannten verdünnten Reagenslösung durch ein Kationenaustauscherharz zum Aufsammeln aufgelöster Kationen und Radionukliden, um die genannte verdünnte Reagenslösung zu regenerieren;
- Recyceln der genannten regenerierten Reagenslösung durch das genannte System; und
- Passieren der genannten verdünnten Reagenslösung durch ein Mischbett aus Ionenaustauscherharzen zur Entfernung des genannten Dekontaminierungsreagens aus dem genannten System.

8. Verfahren gemäß Anspruch 7,
wobei das Gewichtsverhältnis der EDTA zur Zitronensäure zwischen 1.5:1 und 3:1 ist.

9. Verfahren gemäß einem der Ansprüche 7 bis 8,
wobei das genannte Dekontaminierungsreagens darüber hinaus einen Korrosionsinhibitor enthält, wobei der Korrosionsinhibitor entweder Rodine 31A oder eine schwefel- und halogenidfreie Korrosionsinhibitor-Mischung ist.

10. Verfahren gemäß einem der Ansprüche 7 bis 9,
wobei das genannte Dekontaminierungsreagens darüber hinaus einen Sauerstofffänger enthält,
wobei der Sauerstofffänger vorzugsweise Hydrazin ist.

11. Verfahren gemäß einem der Ansprüche 7 bis 10,
wobei das genannte Dekontaminierungsreagens darüber hinaus ein Reduktionsmittel enthält.

12. Verfahren gemäß einem der Ansprüche 7 bis 11,
wobei die genannte verdünnte Reagenslösung EDTA in einer Konzentration von ungefähr 1,8 g/L und Zitronensäure in einer Konzentration von ungefähr 2,0 g/L enthält.

13. Verfahren gemäß einem der Ansprüche 7 bis 12,
wobei der CANDU-Reaktor heruntergefahren wird.

**Revendications**

1. Système de décontamination, comprenant :

- un réacteur CANDU ayant un système de transport de chaleur primaire, un système de transport de refroidissement ou un système de transport d'eau qu'il s'agit de décontaminer, ayant un volume $V_S$;
- un réservoir d'injection ayant un volume $V_I$, dans lequel le réservoir d'injection contient un réactif de décontamination concentré pour décontamination du système de transport de chaleur primaire, du système de transport de refroidissement ou du système de transport d'eau du réacteur CANDU, dans lequel ledit réactif de décontamination concentré est une boue aqueuse comprenant du EDTA et de l'acide citrique, dans laquelle la concentration du EDTA et de l'acide citrique dans le réactif de décontamination concentré est déterminé sur la base du volume $V_S$ du système de transport de chaleur primaire, du système de transport de refroidissement ou du système de transport d'eau du réacteur CANDU qu'il s'agit de décontaminer et le volume $V_I$ du réactif qui peut être injecté,
dans lequel ladite boue aqueuse comprend du EDTA à une concentration de ((environ 0,6 à environ 3,0 g/L) x $V_S$)/$V_I$ et de l'acide citrique à une concentration de (environ 0,4 à environ 2,2 g/L) x $V_S$)/$V_I$.

2. Système de décontamination selon la revendication 1,
dans lequel le rapport EDTA : acide citrique est entre 1,5:1 et 3:1 en poids.

**3.** Système de décontamination selon l'une quelconque des revendications 1 et 2,
dans lequel le réactif de décontamination concentré comprend additionnellement un inhibiteur de corrosion,
dans lequel l'inhibiteur de corrosion et de préférence soit du Rodine™ 31A soit un mélange de soufre et d'un
inhibiteur de corrosion exempt d'halogène.

**4.** Système de décontamination selon l'une quelconque des revendications 1 à 3,
dans lequel le réactif de décontamination concentré comprend additionnellement un suppresseur d'oxygène,
dans lequel le suppresseur d'oxygène est de préférence de l'hydrazine.

**5.** Système de décontamination selon l'une quelconque des revendications 1 à 4,
dans lequel le réactif de décontamination concentré comprend additionnellement un réactif réducteur.

**6.** Système de décontamination selon l'une quelconque des revendications 1 à 5,
dans lequel la concentration de EDTA est ((environ 1,8 g/L) x $V_S$)/$V_I$ et la concentration d'acide citrique est ((environ 2,0 g/L) x $V_S$)/$V_I$.

**7.** Procédé de décontamination d'un système de transport de chaleur primaire, d'un système de refroidissement ou d'un système de transport d'eau d'un réacteur CANDU, comprenant les étapes consistant à :

- déterminer un volume d'injection $V_I$ d'un réactif de décontamination qui peut être injecté dans un agent de refroidissement en circulation dans ledit système;
- déterminer un volume $V_S$ dudit système;
- déterminer une concentration de EDTA et une concentration d'acide citrique pour un réactif de décontamination concentré, dans lequel ladite concentration de EDTA est ((environ 0,6 à environ 3,0 g/L) x $V_S$)/$V_I$ et ladite concentration d'acide citrique est ((environ 0,4 à environ 2,2 g/L) x $V_S$/$V_I$,
- injecter ledit volume d'injection $V_I$ dudit réactif de décontamination concentrée dans l'agent de refroidissement en circulation dans ledit système pour former une solution de réactif dilué dans laquelle le EDTA est présent à une concentration allant depuis environ 0,6 jusqu'à environ 3,0 g/L et l'acide citrique est présent à une concentration allant depuis environ 0,4 jusqu'à environ 2,2 g/L, dans lequel ledit réactif de décontamination concentré est injecté sous forme d'une boue aqueuse;
- faire circuler ladite solution de réactif dilué pour dissoudre les dépôts contaminés dans celle-ci ;
- faire passer la dissolution de réactif dilué à travers une résine d'échange cationique pour recueillir les cations et les radionucléides dissous afin de régénérer la dissolution de réactif dilué ;
- recycler la dissolution de réactif régénérée à travers ledit système; et
- faire passer la dissolution de réactif dilué à travers une résine échangeuse d'ions en lit mixte pour supprimer ledit réactif de décontamination hors dudit système.

**8.** Procédé selon la revendication 7,
dans lequel le rapport EDTA : acide citrique dans la dissolution de réactif dilué est entre 1,5:1 et 3:1 en poids.

**9.** Procédé selon l'une quelconque des revendications 7 et 8,
dans lequel ledit réactif de décontamination comprend également un inhibiteur de corrosion, dans lequel l'inhibiteur de corrosion est soit du Rodine 31A soit un mélange de soufre et d'un inhibiteur de corrosion exempt d'halogène.

**10.** Procédé selon l'une quelconque des revendications 7 à 9,
dans lequel ledit réactif de décontamination comprend également un suppresseur d'oxygène,
dans lequel le suppresseur d'oxygène est de préférence de l'hydrazine.

**11.** Procédé selon l'une quelconque des revendications 7 à 10,
dans lequel ledit réactif de décontamination comprend également un réactif réducteur.

**12.** Procédé selon l'une quelconque des revendications 7 à 11,
dans lequel la dissolution de réactif dilué comprend du EDTA à une concentration d'environ 1,8 g/L et de l'acide citrique à une concentration d'environ 2,0 g/L.

**13.** Procédé selon l'une quelconque des revendications 7 à 12,
dans lequel le réacteur CANDU est arrêté.

**Figure 1**

Figure 2

Figure 3

**Figure 4**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CA 1062590
- US 4537666 A
- US 2002196891 A
- FR 2644618 A
- CA 1136398
- US 4512921 A